# EUROPEAN PATENT APPLICATION

(11) **EP 0 779 198 A1**
(43) Date of publication of application: **18.06.1997**
(21) Application number: 96203489.8
(22) Date of filing: 09.12.1996
(51) Int. Cl.: B62B 1/26, E04G 21/16

(54) **Method for moving an object and device adapted for performing such method**

(30) Priority: 14.12.1995 NL 1001898
(71) Applicant: Ytong Nederland B.V., 4214 DR Vuren (NL)
(72) Inventor: Kömhoff, Wilhelmus Petrus Johannes, Grathem (NL)
(74) Representative: Konings, Lucien Marie Cornelis Joseph

(57) **Abstract**

Method for moving an object, in which an object for moving is tilted in a tilting direction to a practically horizontal plane, then moved to a desired location, whereafter the object is tilted in opposed tilting direction to a practically vertical plane and set down at the desired location. The device, which is suitable for performing this method, is provided with a support frame extending parallel to a supporting plane, a support extending transversely of the supporting plane and located at an outer end of the support frame, and a tilting frame provided with a curvature and extending parallel to a plane transversely of the supporting plane, wherein an outer end of the tilting frame is connected to the outer end of the support frame and another outer end of the tilting frame is located opposite to and at a distance from the support frame, wherein the device is tiltable over the curvature from a position in which the supporting plane extends vertically to a position in which the supporting plane extends horizontally.

## Description

The invention relates to a method for moving an object.

The invention also relates to a device suitable for performing such a method.

The moving of relatively heavy and large objects has been a great problem for many years, particularly in the building industry. Here for instance rectangular panels often of more than 100 kg have to be moved from a store to a desired location in the building under construction. Manual lifting and moving of such panels is practically impossible and not permitted by statutory working conditions requirements. Known devices for lifting and moving such panels are time-consuming and comparatively heavy and such a device cannot easily be taken to another floor of a building or another building site.

The invention has for its object to provide a method with which objects can be moved in simple manner.

This object is achieved in the method according to the invention in that an object for moving is tilted in a tilting direction to a practically horizontal plane, then moved to a desired location, whereafter the object is tilted in opposed tilting direction to a practically vertical plane and set down at the desired location.

The object, for instance an elongate panel, stands with a side on a ground. It is subsequently tilted whereby the object comes to lie in a horizontal plane, whereafter it is moved in this position to the desired location. The object is then rotated in opposed tilting direction whereby the object comes to lie once again on its side. The object is moved efficiently in this manner, wherein there is no danger of the object tilting during the transport.

An embodiment of the method according to the invention is characterized in that before being tilted in opposed tilting direction the object is rotated in the practically horizontal plane.

The object is positioned in this manner in a desired position at the desired location. During the moving of an object which lies originally on the side, the object is rotated so that the object lies on another side after being moved and tilted.

The invention also has for its object to provide a device for performing the method according to the invention.

This object is achieved in the device according to the invention in that the device is provided with a support frame extending parallel to a supporting plane, a support extending transversely of the supporting plane and located at an outer end of the support frame, and a tilting frame provided with a curvature and extending parallel to a plane transversely of the supporting plane, wherein an outer end of the tilting frame is connected to the outer end of the support frame and another outer end of the tilting frame is located opposite to and at a distance from the support frame, wherein the device is tiltable over the curvature from a position in which the supporting plane extends vertically to a position in which the supporting plane extends horizontally.

The support is pushed under the object for moving in a vertical position of the device. The device is subsequently tilted through 90°, wherein the tilting frame rolls along the tilt relative to a ground. The object hereby comes to lie on the support frame which is now in a horizontal position. The device is then moved to the desired location, whereafter the device is tilted in opposed tilting direction through 90° and the support is pulled away from beneath the object and the object lies at a desired location.

An embodiment of a device according to the invention is characterized in that the device is provided with a table which is slidably connected to the support frame and which is displaceable parallel to the supporting plane.

Using the table the object can easily be shifted relative to the support frame so that a relatively good weight distribution is obtained over the device.

Another embodiment of a device according to the invention is characterized in that the table is rotatable in the supporting plane.

Using the table the object is translatable and rotatable relative to the support frame, whereby the object can be carried into a position relative to the support frame such that after being tilted back it lies in the desired position at the desired location.

The invention will be further elucidated with reference to the drawing, in which:
Fig. 1A-1C show respectively a side, top and front view of a first embodiment of a device according to the invention,
Fig. 2 shows a perspective view of the device depicted in Fig. 1A-1C,
Fig. 3A-3C show the device depicted in Fig. 1A-1C in different positions,
Fig. 4A-4C show respectively side and top views of a second embodiment of a device according to the invention,
Fig. 5 is a perspective view of the device shown in Fig. 4A-4C,
Fig. 6A-6G show the device depicted in Fig. 4A-4C in different positions,
Fig. 7A-7D show a blocking mechanism of a device according to the invention in different positions,
Fig. 8-13 show a third embodiment of a device according to the invention.

In the figures corresponding components are provided with the same reference numeral.

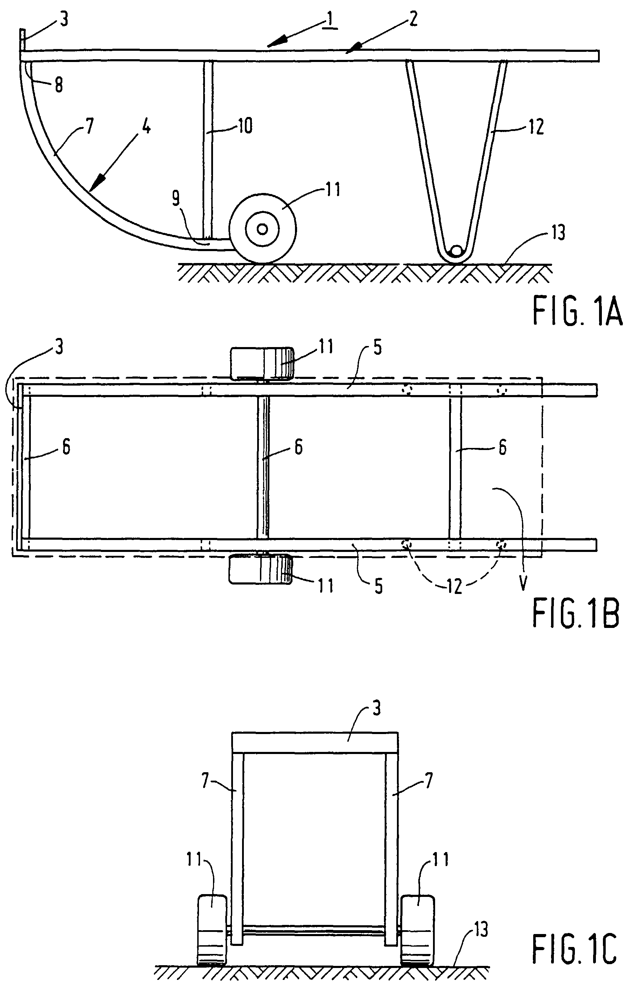

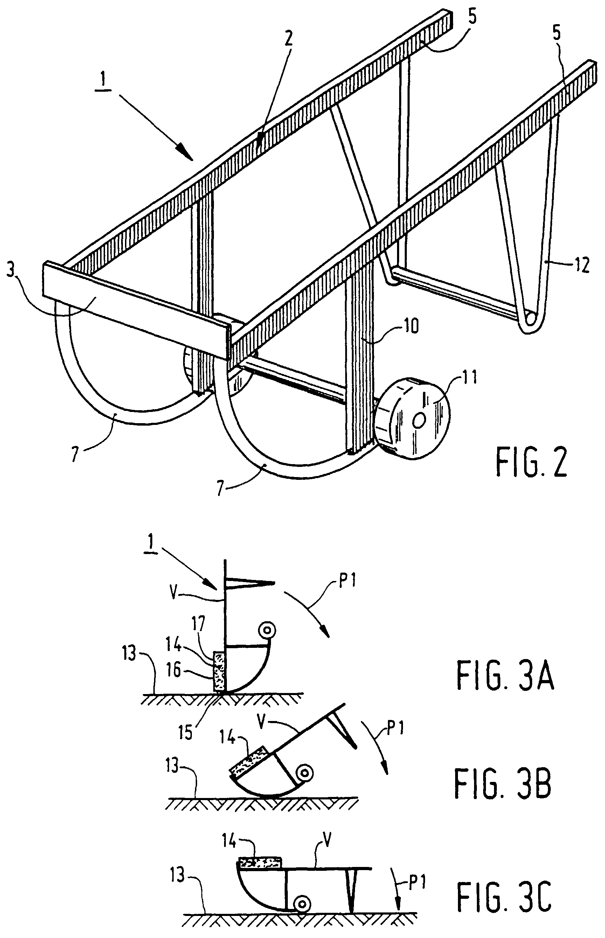

Fig. 1A-1C and Fig. 2 show respectively a side, top and front view and a perspective view of a first embodiment of a device 1 according to the invention. The device 1 is provided with a support frame 2 forming a supporting plane V, a support 3 extending transversely of the support frame and a tilting frame 4. Support frame 2 is provided with two parallel, metal rectangular tubes 5 and three rods 6 which are directed transversely of tubes 5 and the outer ends of which are welded to tubes 5. The tilting frame 4 comprises two curved profiles 7 which are each fixed with an outer end 8 to the support frame and are connected with the other outer end 9 to rods 10 extending transversely of the supporting plane. Rods 10 are also connected to the support tubes 5. The outer ends 9 of the curved profiles 7 are provided with wheels 11 whereby the device 1 is mobile. The device 1 is further provided with two legs 12 which are each connected to a support tube 5 and extend transversely of the plane and with which device 1 can be held in a horizontal position relative to a ground 13.

Fig. 3A-3C show the operation of the device 1 according to the invention. An elongate panel 14 lies with a side 15 on a ground 13. An end surface 16 of panel 14 can be seen in Fig. 3A-3C.

The device 1 is placed in vertical position in front of panel 15, wherein supporting plane V is located parallel to the surface 17 of the panel. The support 3 is then pushed under the side 15 of panel 14 (Fig. 3A). The device 1 is then tilted together with panel 14 over the curved profiles 7 in the direction of the arrow P1 (Fig. 3B) until the supporting plane V and the surface 17 of panel 14 lie practically horizontal (Fig. 3C). In this position panel 14 is moved using the device 1. A person takes hold of the device on the outer ends of the tubes 5 remote from the support 3, lifts the legs 12 from the ground and moves device 1 to the desired position. At the desired location the device 1 is tilted in a direction opposed to arrow P1 so that the supporting plane is directed vertically. The support 3 under panel 14 is then removed and panel 14 lies at the desired location. The curvature of profiles 7 is such that the device is easily tiltable with little force from a vertical to a horizontal position and vice versa.

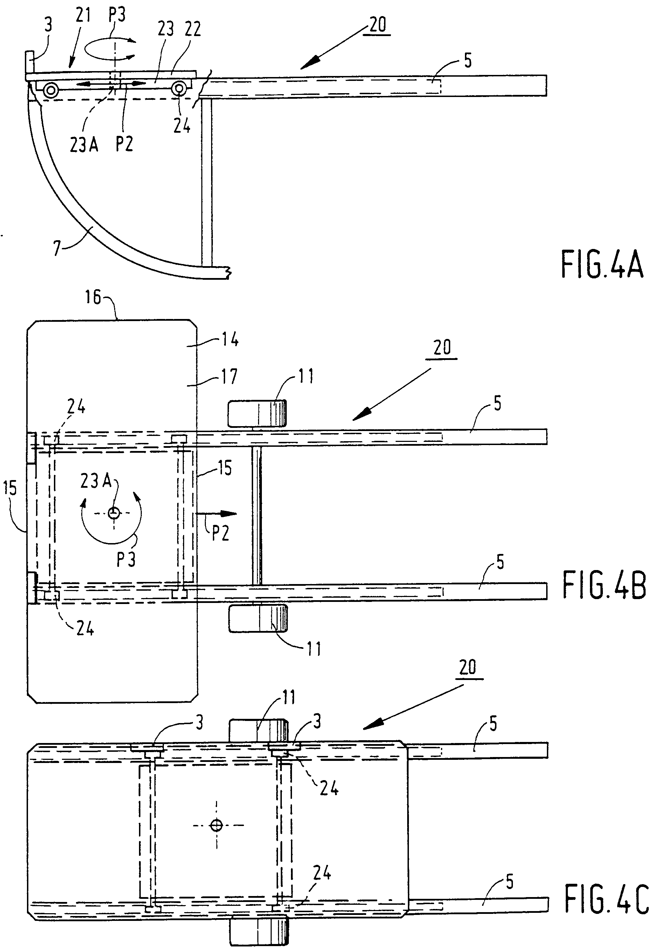

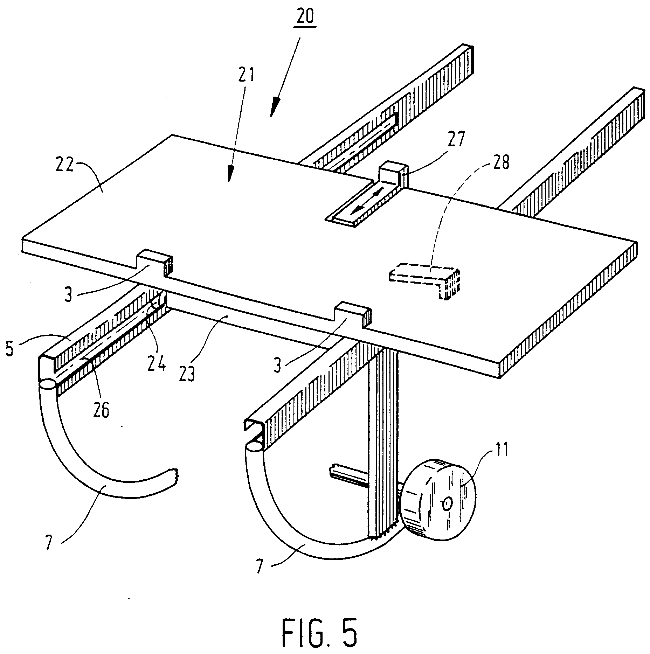

Fig. 4A-4C and Fig. 5 show respectively side and top views and a perspective view of a second embodiment of a device 20 according to the invention, wherein in Fig. 4B and 4C a panel for moving is shown on the device 20. Of device 20 only the most relevant parts are shown which differ from the device 1 according to the first embodiment. In Fig. 4A for instance the bottom part 12 and wheels 11 of device 20 are thus not shown.

The device 20 is provided with a table 21 comprising an upper leaf 22 and a lower leaf 23 lying parallel thereto. Lower leaf 23 is provided with a plurality of wheels 24 which are rollable in tubes 5 via slots 26 extending through walls in the rectangular tubes 5. Upper leaf 22 is provided with the support 3 and is rotatably connected to lower leaf 23 via a pin 23A. Table 21 is displaceable in the direction of arrow P2 and the upper leaf 22 of table 21 is rotatable relative to lower leaf 23 in the direction of the double arrow P3. Table 21 is further provided with a slidable clamp 27 with which an object can be temporarily secured relative to the upper surface between support 3 and clamp 27. Using a clamp 28 the table 21 is fixed relative to support frame 3. Due to the clamps 27, 28 the object cannot slide or rotate relative to the device during movement of the device.

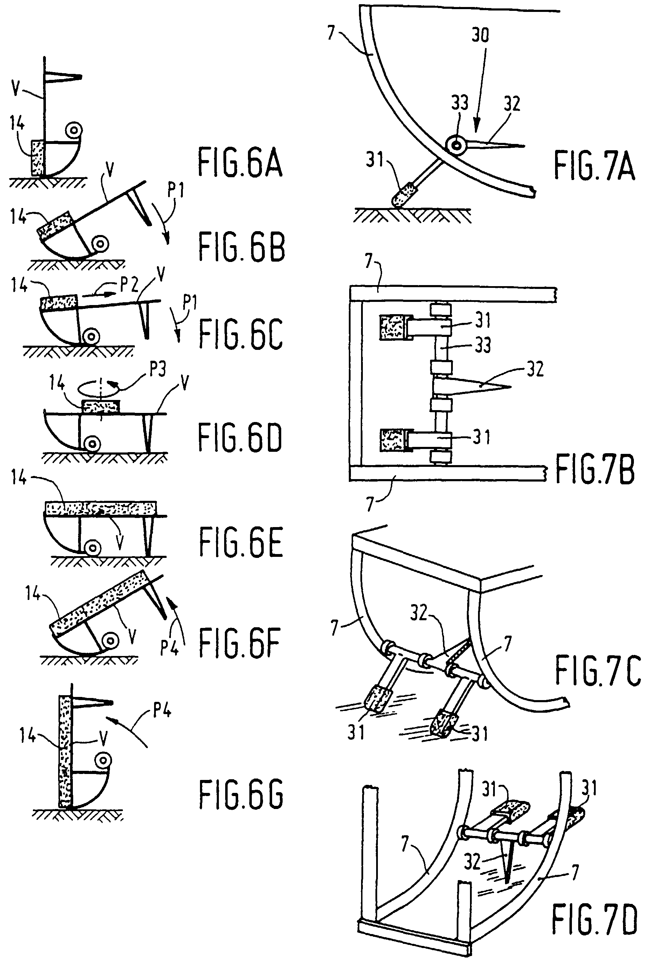

In Fig. 6A-6G the operation of the device 20 depicted in Fig. 4A-4C and Fig. 5 is shown in a number of steps. The steps shown in Fig. 6A-6C correspond with the steps shown in Fig. 3A-3C and are therefore not explained further. The position of panel 14 shown in Fig. 6C is shown more clearly in Fig. 4B. From this position the table 21 with the panel 14 situated thereon is displaced in the direction of arrow P2 into the horizontal position shown in Fig. 6D. The upper leaf 22 with panel 14 situated thereon is then rotated in the direction of arrow P3 until the sides of the panel are directed parallel to the support tubes 5 (see Fig. 6E). The panel 14 is then transported to the desired location using device 20, whereafter device 20 is tilted in the direction of arrow P4 (Fig. 6F) until panel 14 stands vertically (16H), whereafter support 3 is slid out from under panel 14. In this manner a panel of for instance 2 metres long, 0.2 m thick and 0.8 m wide and with a weight of more than 100 kg can be transported and moved in simple manner by one person.

Fig. 7A-7D show respectively a side view, a top view and two perspective views of a blocking mechanism 30 of a device according to the invention. The blocking mechanism 30 comprises two pins 31 located close to profiles 7 and a pointed pin 32 situated between pins 31. Pins 31 and pointed pin 32 are jointly pivotable on a rod 33 extending between profiles 7. In the position of blocking mechanism 30 shown in Fig. 7C, tilting of the device from a horizontal position to the vertical position is prevented because the pins 31 lie against a stop (not shown). In the position of blocking mechanism 30 shown in Fig. 7D, tilting of the device from the vertical position to the horizontal position is prevented by pointed pin 32. The pointed pin 32 herein lies against a stop (not shown). Pins 31 and pointed pin 32 are released by tilting the device slightly beyond respectively the horizontal or vertical position, whereafter the pins or pointed pins are pivoted on the rod 33.

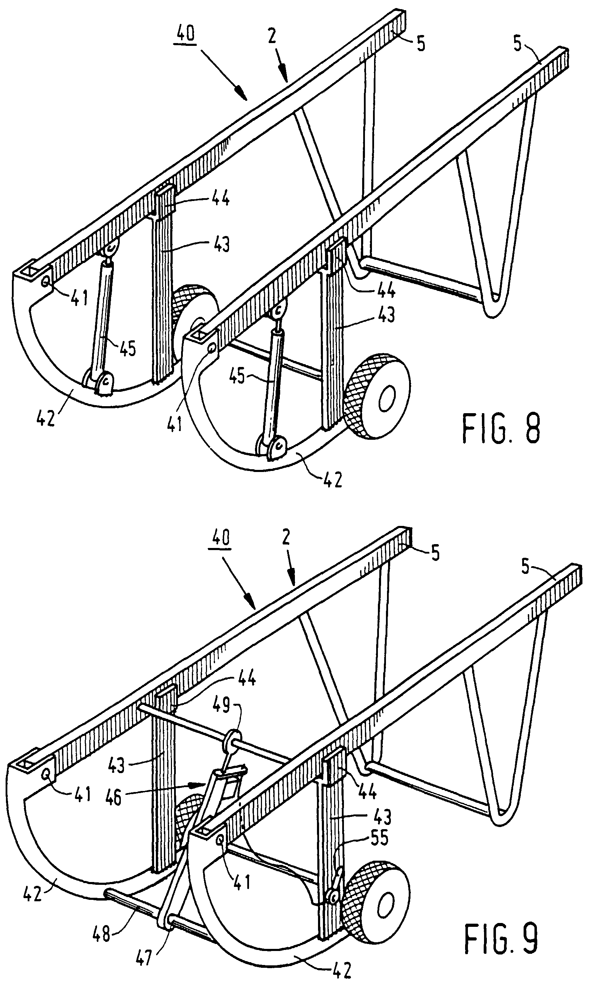

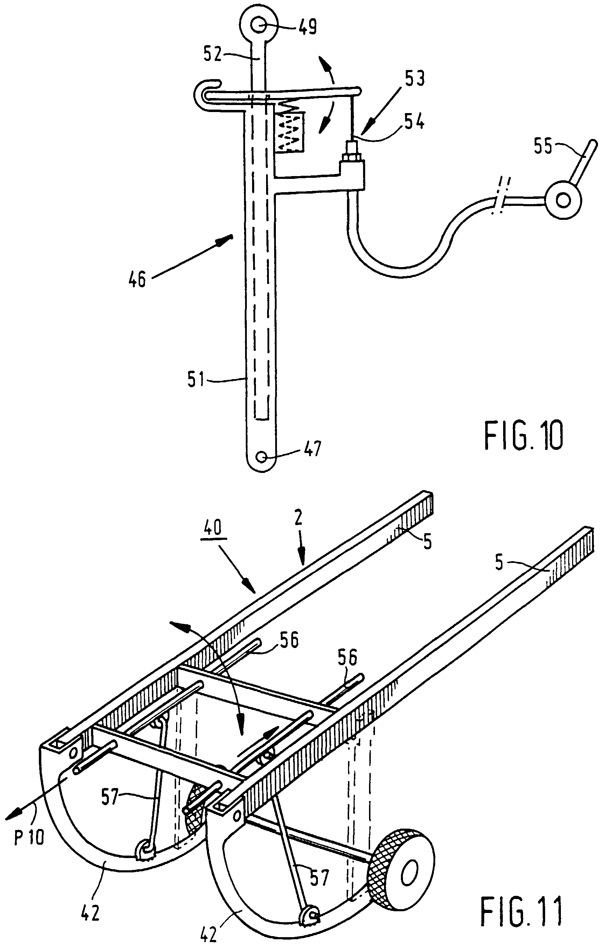

Three different details of the third embodiment of the device 40 according to the invention are shown for purposes of clarity in the figures 8, 9 and 11. In reality the device 40 comprises all these details. Device 40 comprises a support frame 2 and a tilting frame 42 pivotable on an outer end 41 of support frame 2. Tilting frame 42 is provided with rods 43 extending transversely of tubes 5 and provided on outer ends located close to tubes 5 with U-shaped recesses 44 in which the tubes 5 are situated. Device 40 is further provided with gas pressure cylinders 45 which are connected at one end to tilting frame 42 and at another end to support frame 2. Gas pressure cylinders 45 will tend to pivot tilting frame 42 relative to support frame 2. Device 40 is further provided with a locking mechanism 46 (Fig. 9, 10) using which the tilting frame 42 can be locked relative to the support frame. Locking mechanism 46 is pivotally connected on one side 47 to a rod 48 connected to tilting frame 42 and is pivotally connected on another side 49 to a rod 50 connected to support frame 2. Locking mechanism 46 comprises a rod 52 slidable in a sleeve 51 wherein a displacement of rod 52 relative to sleeve 51 is only possible after release of the braking mechanism 53 by means of pulling on a brake cable 54 using a handle 55. This released position is shown in Fig. 10.

Device 40 further comprises a pair of supports 56 which are mounted slidably relative to tubes 5 (see Fig. 11). Each support 56 is pivotally connected close to the middle to an auxiliary rod 57 which is pivotally connected to the tilting frame 42 with an outer end remote from the support 56.

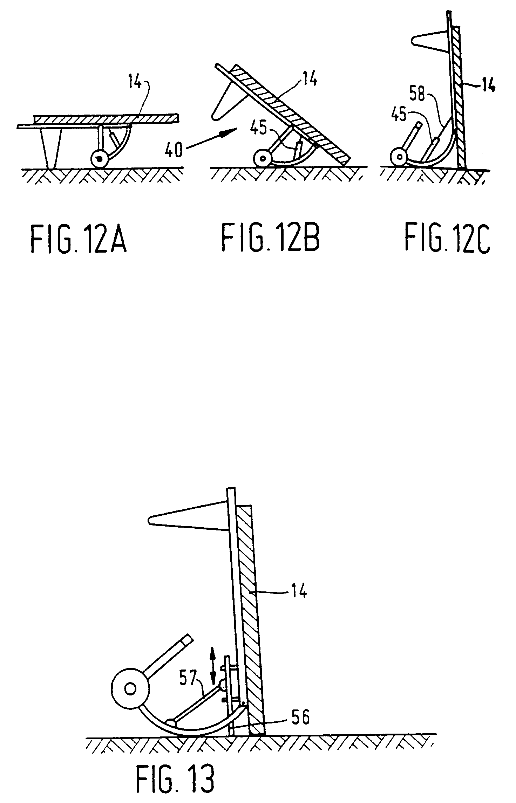

The operation of device 40 will now be elucidated briefly with reference to Fig. 12A-12C and Fig. 13. In the position shown in Fig. 12A the tilting frame 42 is folded up relative to support frame 2 and held in this folded position using the locking mechanism 46. Supports 56 are herein situated in the position shown in Fig. 11.

The whole device 40 with the panel 14 located thereon is subsequently tilted into the position shown in Fig. 12B. Using handle 55 the locking mechanism 46 is released (see Fig. 10) whereby the pistons 59 situated in gas pressure cylinders 45 pivot the tilting frame 42 and the support frame 2 relative to each other and the panel 14 is displaced to the position shown in Fig. 12C. The supports 56 herein slide in the direction indicated by arrow P10 to the position shown in Fig. 13, wherein supports 56 prevent device 40 from possibly falling over.

It is possible to make the tubes and the rods of the device telescopic so that the device can be transported compactly.

The optimum shape and dimension of the curve of profiles 7 can be determined experimentally and depends inter alia on the size and weight of the object for moving and the permitted required force and effort of the operative personnel.

The device can also be provided with two pairs of wheels so that the device can move in simpler and lighter manner than a device with one pair of wheels. In the case of the device with two pairs of wheels the operative personnel dos not have to tilt the device clear of the ground but can move the device by pushing. A pair of wheels can be embodied as swivel castors so that bends can be negotiated easily.

For comparatively very heavy objects the device can be provided with a manually or electrically operable winch with which the object for moving is displaced vertically upward in a vertical position of the device. Tilting of the device is thus simplified.

## Claims

1. Method for moving an object, **characterized in that** an object for moving is tilted in a tilting direction to a practically horizontal plane, then moved to a desired location, whereafter the object is tilted in opposed tilting direction to a practically vertical plane and set down at the desired location.

2. Device as claimed in claim 1, **characterized in that** before being tilted in opposed tilting direction the object is rotated in the practically horizontal plane.

3. Device suitable for performing a method as claimed in either of the foregoing claims, **characterized in that** the device is provided with a support frame extending parallel to a supporting plane, a support extending transversely of the supporting plane and located at an outer end of the support frame, and a tilting frame provided with a curvature and extending parallel to a plane transversely of the supporting plane, wherein an outer end of the tilting frame is connected to the outer end of the support frame and another outer end of the tilting frame is located opposite to and at a distance from the support frame, wherein the device is tiltable over the curvature from a position in which the supporting plane extends vertically to a position in which the supporting plane extends horizontally.

4. Device as claimed in claim 3, **characterized in that** the device is provided with a table which is slidably connected to the support frame and which is displaceable parallel to the supporting plane.

5. Device as claimed in claim 4, **characterized in that** the table is rotatable in the supporting plane.

6. Device as claimed in any of the foregoing claims, **characterized in that** the device can be moved in a position wherein the supporting plane extends horizontally.

7. Device as claimed in any of the foregoing claims, **characterized in that** the table is provided with the support ant an adjustable clamp located opposite the support, between which an object for transporting is fixable.

8. Device as claimed in any of the foregoing claims, **characterized in that** the device is provided with a blocking mechanism for blocking the device in a position in which the supporting plane extends vertically or horizontally.

9. Device as claimed in any of the foregoing claims, **characterized in that** the device is telescopic.

10. Device as claimed in any of the foregoing claims, **characterized in that** the tilting frame is pivotable relative to the support frame.

11. Device as claimed in claim 10, **characterized in that** the tilting frame is pivotable relative to the support frame using gas pressure cylinders.

12. Device as claimed in claim 10 or 11, **characterized in that** the tilting frame is lockable relative to the support frame using a locking mechanism.

13. Device as claimed in claim 10, 11 or 12, **characterized in that** the device is provided with supports slidable relative to the support frame, which supports are slidable subject to the pivoting of the tilting frame relative to the support frame.
